# FASCICULE DE BREVET EUROPEEN

(11) **EP 3 959 479 B1**
(45) Date de publication et mention de la délivrance du brevet: **22.03.2023**
(21) Numéro de dépôt: 20719430.9
(22) Date de dépôt: 15.04.2020
(51) Int. Cl.: F28F 9/02, F02B 29/04

(54) **ECHANGEUR DE CHALEUR AVEC SÉCURISATION DE LA FIXATION AU COIN DE BOITE**
WÄRMETAUSCHER MIT SICHERUNG DER BEFESTIGUNG AN DER SAMMLERECKE
HEAT EXCHANGER WITH SECUREMENT OF THE FASTENING AT THE HEADER CORNER

(30) Priorité: 25.04.2019 FR 1904395
(43) Date de publication de la demande: 02.03.2022
(73) Titulaire: VALEO SYSTEMES THERMIQUES, 78320 Le Mesnil Saint-Denis (FR)
(72) Inventeur: FERLAY, Benjamin, 85774 UNTERFOEHRING (DE); SOUKEUR, Zoulika, 78322 LE MESNIL SAINT DENIS CEDEX (FR); VALLEE, Nicolas, 78322 LE MESNIL SAINT DENIS CEDEX (FR); GUT, Damian, 32 050 SKAWINA (PL)
(74) Mandataire: Valeo Systèmes Thermiques
(86) Numéro de dépôt international: PCT/EP2020/060639
(87) Numéro de publication internationale: WO 2020/216663

(56) Documents cités:
- WO-A1-2018/050977
- US-A1- 2008 308 263

## Description

La présente invention se rapporte au domaine des échangeurs de chaleur et plus particulièrement de la fixation entre un faisceau d'échange de chaleur et une boite d'entrée et/ou de sortie d'un fluide qui traverse le faisceau d'échange de chaleur.

Un échangeur de chaleur, comme par exemple un refroidisseur d'air de suralimentation, comporte généralement un faisceau d'échange de chaleur comprenant des tubes ou un assemblage de plaques à l'intérieur desquels circule un premier fluide caloporteur. L'échangeur de chaleur comprend également des boites d'entrée ou de sortie d'un second fluide caloporteur, ici l'air de suralimentation en provenance d'un turbocompresseur. Les boites d'entrée ou de sortie sont fixées au faisceau d'échange de chaleur de sorte que le second fluide caloporteur circule entre les tubes ou les plaques et puisse échanger des calories avec le premier fluide caloporteur.

Le document WO 2018/050977 A1 montre un échangeur de chaleur comme dans le préambule de revendication 1.

Lors du procédé de fabrication de l'échangeur de chaleur, les boites sont généralement fixées au faisceau d'échange de chaleur au moyen d'un organe de fixation. Cet organe de fixation peut comprendre un bord métallique qui s'étend sur la périphérie du faisceau d'échange de chaleur et qui comprend une paroi supérieure rabattue par des outils de sertissage sur la boite. Néanmoins, il a été observé par le demandeur que les cycles de pression répétés exercés dans le faisceau d'échange de chaleur par la force de l'air du turbocompresseur, peut faire gonfler la boite et endommager la paroi supérieure, et notamment celle proche des coins du faisceau d'échange de chaleur. Cette pression exercée sur le faisceau d'échange de chaleur peut à terme conduire à la rupture d'une partie de la paroi supérieure proche des coins, affaiblir la fixation de la boite d'entrée ou de sortie dans le faisceau d'échange de chaleur, et par conséquent entraîner des fuites.

Le but de la présente invention est donc de remédier à l'inconvénient cité ci-dessus en concevant un moyen de sécurisation du maintien de la boite d'entrée ou de sortie en cas de rupture d'une paroi supérieure proche d'un coin de boite. La présente invention concerne donc un échangeur de chaleur comportant :
- un faisceau d'échange de chaleur dans lequel circulent un premier fluide et un second fluide ;
- au moins une boite configurée pour canaliser le second fluide depuis ou vers le faisceau d'échange de chaleur, ladite boite comprenant au moins un épaulement orienté vers l'extérieur de ladite boite, et la boite comprenant au moins un coin de boite ;
- au moins un organe de fixation de la boite est disposé au moins en partie à la périphérie du faisceau d'échange de chaleur et comporte au moins une gorge périphérique délimitée par une paroi de base et une paroi latérale et dans laquelle est logé au moins partiellement l'épaulement de la boite, l'organe de fixation comprenant :
   ∘ une portion rectiligne dont la paroi latérale est en partie prolongée par au moins une paroi supérieure en contact avec l'épaulement de la boite ;
   ∘ au moins une portion de coin en regard du coin de boite ;
caractérisé en ce qu'une partie de la portion de coin est en regard d'une face supérieure de l'épaulement, opposée à la gorge de l'organe de fixation, et à une distance non nulle de cette face supérieure de telle sorte qu'un espace est ménagé entre la portion de coin et la face supérieure de l'épaulement.

L'échangeur de chaleur est un dispositif permettant des échanges de calories entre deux fluides sans les mélanger. Dans le cadre de l'invention, celui-ci peut par exemple, être un refroidisseur d'air de suralimentation, dont la fonction est de refroidir l'air venant d'un turbocompresseur avant son entrée dans un moteur à combustion interne. Toutefois, l'invention n'est pas limitée à ce seul type d'échangeur. L'échangeur de chaleur comprend alors une boite d'entrée permettant de diriger l'air sortant du turbocompresseur vers le faisceau d'échange de chaleur et une boite de sortie permettant de diriger l'air sortant du faisceau d'échange de chaleur vers le moteur à combustion interne. Afin de solidariser les boites d'entrée et de sortie au faisceau d'échange de chaleur, l'organe de fixation est disposé sur la périphérie du faisceau d'échange de chaleur, de telle sorte qu'une paroi latérale de l'organe de fixation suive le contour du faisceau d'échange de chaleur.

L'organe de fixation comprend alors une paroi supérieure, notamment en forme de dent, qui prolonge la paroi latérale au niveau d'une portion rectiligne et qui permet de sertir la boite dans le faisceau d'échange de chaleur.

La paroi latérale de la portion de coin est avantageusement prolongée par une paroi d'angle. La paroi d'angle s'étend alors dans le prolongement de la paroi supérieure de la paroi latérale de la portion rectiligne. Dit autrement, la paroi d'angle s'étend entre deux parois supérieures, de telle sorte qu'elle les relie.

Afin de sécuriser la fixation de la boite en cas de déformation ou rupture d'une paroi supérieure, la portion de coin de l'organe de fixation est sertie sur l'épaulement du coin de boite de telle sorte qu'une partie de la portion de coin soit en regard de la face supérieure de l'épaulement. De manière plus précise, la paroi d'angle de la portion de coin est en regard de la face supérieure de l'épaulement, une fois la portion de coin sertie. Dit autrement, la portion de coin joue le rôle d'un organe de sécurisation du maintien de la boite contre le faisceau d'échange de chaleur, en cas de déformation ou de rupture d'une paroi supérieure adjacente, c'est-à-dire d'une dent de sertissage située sur les flancs rectilignes de l'organe de fixation. En particulier, la portion de coin permet d'éviter l'initiation d'une rupture au niveau des coins qui pourrait ensuite se propager dans tout l'organe de fixation.

L'espace ménagé entre la portion de coin et la face supérieure de l'épaulement permet alors d'éviter ou tout au moins de réduire les contraintes mécaniques sur la portion de coin, et notamment sur la paroi d'angle, afin que celle-ci ne soit pas fragilisée en amont, en cas de déformation ou de rupture d'une paroi supérieure adjacente. Il permet également d'éviter les initiations de contraintes pouvant entraîner des déformations et/ou ruptures dans le reste de l'organe de fixation.

Selon une caractéristique de l'invention, la partie de la portion de coin située en regard de la face supérieure de l'épaulement est une butée à l'encontre de la face supérieure en cas de déformation de la paroi supérieure de la paroi latérale. Dit autrement, en cas de rupture ou déformation d'une paroi supérieure adjacente à la portion de coin, la portion de coin en regard de la face supérieure permet de retenir le coin de boite dans le faisceau d'échange de chaleur et/ou d'éviter l'initiation de contraintes qui pourraient entraîner des fissures et/ou des dessertissages.

Selon une caractéristique de l'invention, la portion rectiligne de l'organe de fixation comprend un pli de sertissage situé à une première hauteur d'une extrémité libre de l'épaulement, la portion de coin comprenant une arête de sertissage située à une deuxième hauteur de l'extrémité libre de l'épaulement.

La première hauteur et la deuxième hauteur sont mesurées suivant une droite parallèle à une direction verticale de l'échangeur de chaleur. On comprend que la première hauteur et la deuxième hauteur sont ainsi mesurées suivant des droites parallèles l'une de l'autre.

Selon une caractéristique de l'invention, la boite comprend au moins un bord latéral et le coin de boite, le bord latéral de l'épaulement étant défini par une première épaisseur mesurée entre l'extrémité libre de l'épaulement et la face supérieure de l'épaulement, le coin de boite étant défini par une deuxième épaisseur mesurée parallèlement à la première épaisseur entre l'extrémité libre de l'épaulement et la face supérieure de l'épaulement, la deuxième épaisseur étant strictement inférieure à la première épaisseur.

La première épaisseur et la deuxième épaisseur sont mesurées suivant des droites parallèles à la direction verticale de l'échangeur de chaleur. Également, les épaisseurs sont mesurées préférentiellement le long d'une face de contact de l'épaulement. La face de contact de l'épaulement correspond notamment à la face sur laquelle est positionnée la paroi latérale de l'organe de fixation.

L'épaisseur du coin de boite étant inférieure à celle du bord latéral, on comprend qu'un espace soit ménagé entre la paroi d'angle et la face supérieure de l'épaulement, l'espace correspondant à la différence d'épaisseur entre le bord latéral et le coin de boite.

Selon une caractéristique de l'invention, la première hauteur du pli de sertissage est strictement inférieure à la deuxième hauteur de l'arête de sertissage.

Cette caractéristique permet de générer l'espace entre la paroi d'angle et la face supérieure de l'épaulement. Notamment, cette caractéristique peut être prise seule, ou en combinaison avec la caractéristique précédente concernant l'épaisseur du bord latéral et du coin de boite. En effet, la deuxième épaisseur du coin de boite inférieure à la première épaisseur du bord latéral de l'épaulement en combinaison d'une deuxième hauteur de pli supérieure à la première hauteur de pli, permet de générer un espace plus grand que si les caractéristiques évoquéesétaient prises indépendamment l'une de l'autre.

De manière alternative, la première hauteur du pli de sertissage est égale à la deuxième hauteur de l'arête de sertissage.

On comprend que cette caractéristique permet de générer l'espace entre la paroi d'angle et la face supérieure uniquement si elle est prise en combinaison avec la caractéristique afférente à la deuxième épaisseur du coin de boite inférieure à la première épaisseur du bord latéral de l'épaulement, évoquée précédemment.

Selon une caractéristique de l'invention, la portion de coin comprend une paroi de repli, la portion rectiligne de l'organe de fixation s'étendant sur une première distance mesurée entre la paroi de base et une extrémité libre de la paroi supérieure de la paroi latérale, la portion de coin s'étendant sur une deuxième distance mesurée parallèlement à la première distance entre la paroi de base et une extrémité libre de la paroi de repli de la portion de coin, la deuxième distance étant strictement supérieure à la première distance.

De manière avantageuse, la première distance et la deuxième distance sont mesurées selon une droite parallèle à la direction verticale de l'échangeur de chaleur. La paroi de repli s'étend parallèlement depuis la paroi d'angle et participe notamment à ce que la deuxième distance de la portion de coin soit supérieure à la première distance de la portion rectiligne.

Il convient de considérer cette caractéristique de l'invention en combinaison avec la caractéristique évoquée précédemment concernant la deuxième hauteur de l'arête de sertissage, supérieure à la première hauteur du pli de sertissage. Ces deux caractéristiques combinées permettent notamment de générer l'espace entre la face supérieure de l'épaulement et la portion de coin, et plus précisément avec la paroi de repli.

De manière alternative, cette caractéristique de l'invention peut être prise en combinaison avec la caractéristique précédente de la deuxième épaisseur du coin de boite inférieure à la première épaisseur du bord latéral de l'épaulement et la première hauteur du pli de sertissage égale à la deuxième hauteur de l'arête de sertissage. Ces trois caractéristiques permettent de ménager l'espace entre la face supérieure d'épaulement et la portion de coin, et notamment pour cette combinaison, la paroi d'angle.

L'avantage commun à l'ensemble des combinaisons de ces caractéristiques est notamment que la paroi de repli permet de ménager une plus grande surface de portion de coin en regard de la face supérieure de l'épaulement. Ainsi, la paroi de repli offre une plus grande surface de butée à l'encontre de la face supérieure de l'épaulement en cas de déformation de la paroi supérieure de la paroi latérale.

Selon une caractéristique de l'invention, la portion de coin comprend au moins une portion déformée ménagée au droit et à distance non nulle de la face supérieure de l'épaulement ainsi qu'au moins une aile adjacente à la portion déformée.

La portion déformée peut par exemple être ménagée par sertissage au moyen d'un marteau et d'un pointeau, ou d'une presse. L'aile correspond alors à une portion immédiatement adjacente à la portion déformée, qui est relevée. Dit autrement, l'aile correspond à une partie de la portion de coin qui n'a pas été sertie sur la face supérieure de l'épaulement.

Selon une caractéristique de l'invention, l'organe de fixation est brasé sur la périphérie du faisceau d'échange de chaleur. De manière plus précise, une paroi de gorge de l'organe de fixation peut être brasée sur la périphérie du faisceau d'échange de chaleur. Le brasage permet notamment d'obtenir une fixation solide de l'organe de fixation sur le faisceau d'échange de chaleur, nécessaire au maintien optimal de la boite dans le faisceau d'échange de chaleur.

Selon une caractéristique de l'invention, l'organe de fixation peut comprendre une plaque collectrice pourvue de fentes au niveau desquelles des tubes du faisceau d'échange de chaleur débouchent.

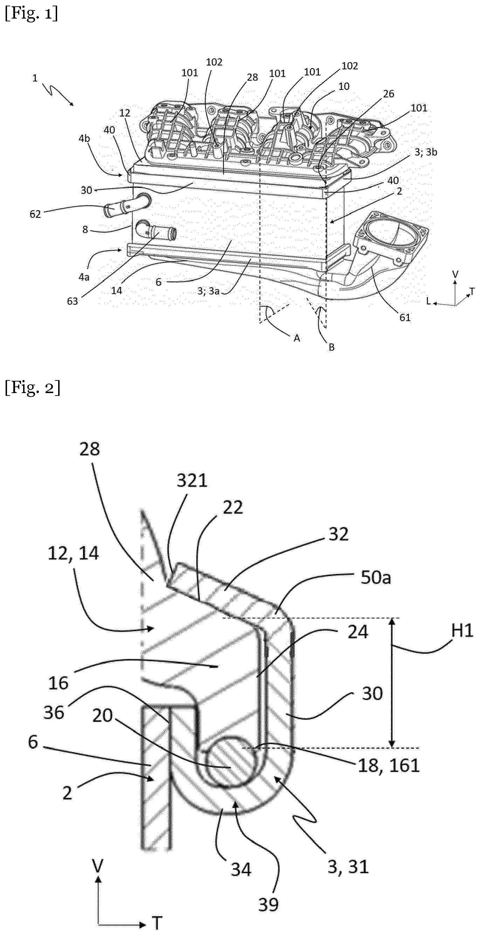

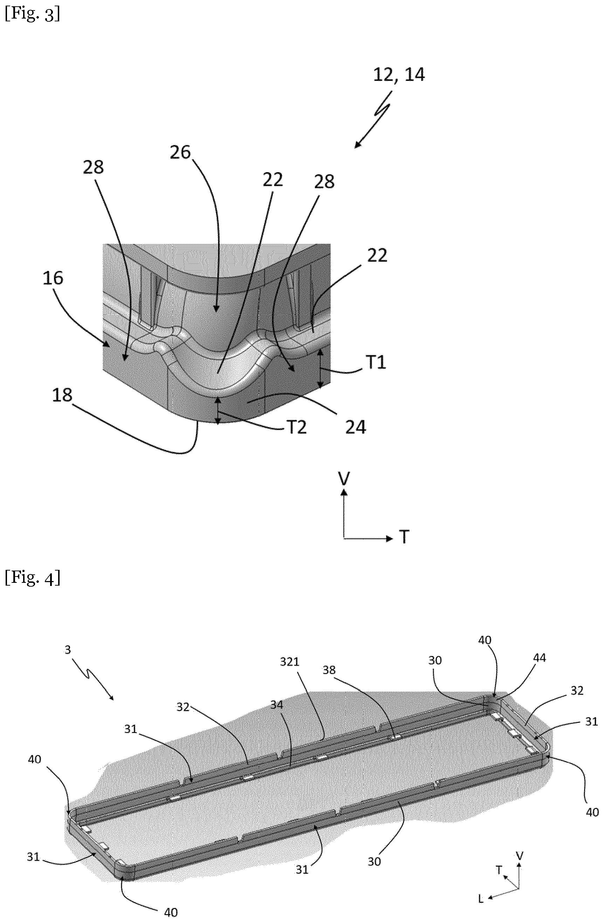

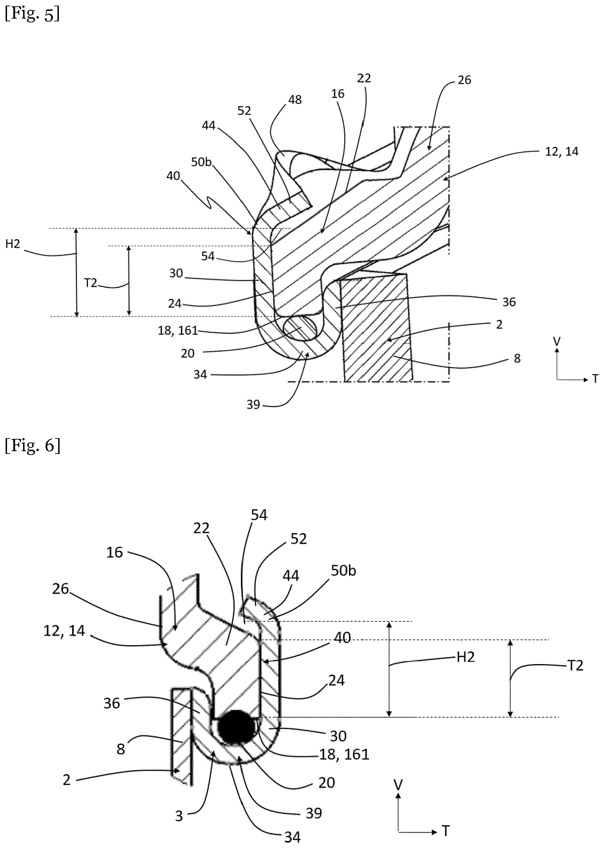

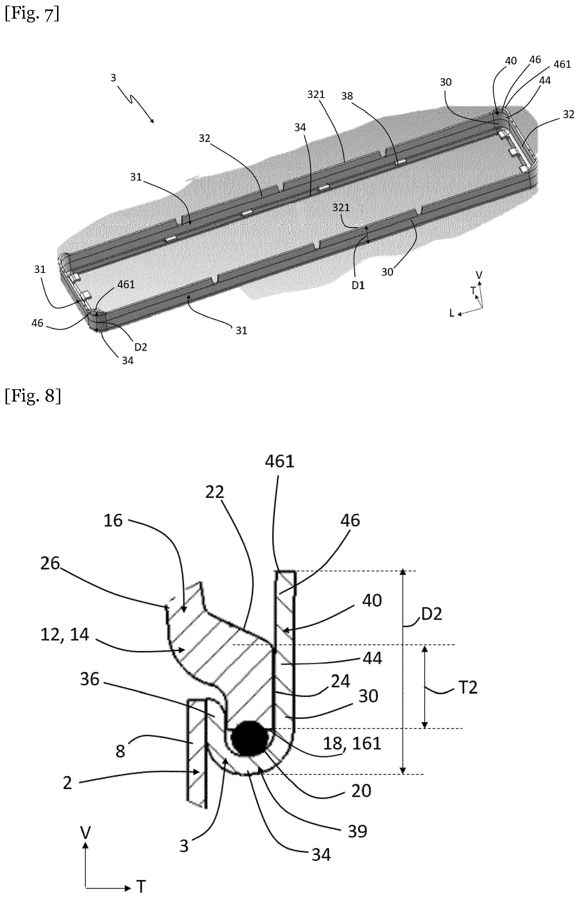

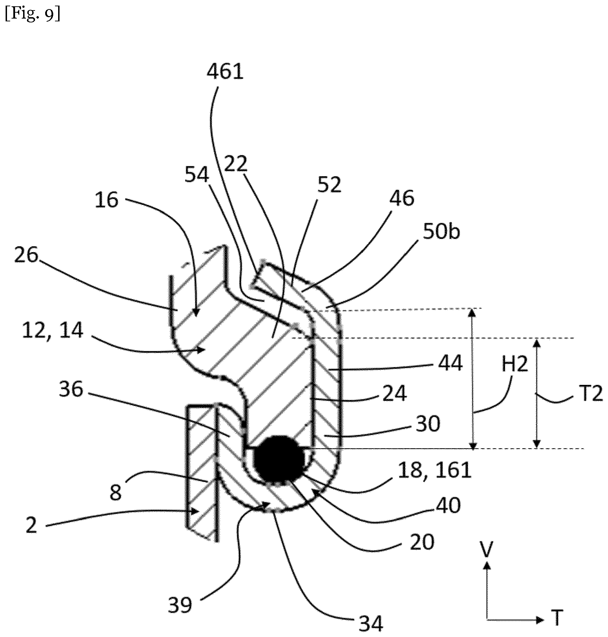

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
- La figure [Fig. 1] est une vue générale en perspective d'un échangeur de chaleur selon l'invention ;
- La figure [Fig. 2] est une vue en coupe suivant un premier plan A, de l'organe de fixation enserré sur un épaulement d'un bord latéral d'une boite d'entrée ou de sortie de l'échangeur de chaleur ;
- La figure [Fig. 3] est une vue rapprochée d'un coin de boite, d'une des boites de l'échangeur de chaleur ;
- La figure [Fig. 4] est une vue générale en perspective d'un organe de fixation selon un premier mode de réalisation de l'invention ;
- La figure [Fig. 5] est une vue en coupe suivant une deuxième plan B, de l'organe de fixation de la figure 4 positionné sur le coin de boite de la figure 3 ;
- La figure [Fig. 6] est une vue en coupe suivant le deuxième plan B, du sertissage de l'organe de fixation de la figure 4 selon un deuxième mode de réalisation de l'invention.
- La figure [Fig. 7] est une vue en perspective d'un organe de fixation selon un troisième mode de réalisation de l'invention ;
- La figure [Fig. 8] est une vue en coupe suivant le deuxième plan B, de l'organe de fixation de la figure 7 positionné sur le coin de boite d'une des boites, avant sertissage ;
- La figure [Fig. 9] est une vue en coupe suivant le deuxième plan B, de l'organe de fixation de la figure 7 positionné sur le coin de boite d'une des boites, après sertissage ;

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

La figure 1 illustre un échangeur de chaleur 1 comprenant l'invention. L'échangeur de chaleur 1, ici un refroidisseur d'air de suralimentation, est composé d'un faisceau d'échange de chaleur 2, d'un collecteur d'admission 10 ainsi que d'au moins un organe de fixation 3. Le faisceau d'échange de chaleur 2 est composé d'une paroi périphérique 6 prenant la forme d'un quadrilatère et comprenant donc quatre coins de faisceau 8. Le faisceau d'échange de chaleur 2 comprend plusieurs tubes ou un assemblage de plaques (non visibles) dans lesquels circule un premier fluide caloporteur entre une conduite d'entrée 62 et une conduite de sortie 63 dudit premier fluide caloporteur, ici un liquide.

L'échangeur de chaleur 1 comprend également une boite d'entrée 14 et une boite de sortie 12 d'un second fluide caloporteur, par exemple un flux d'air suralimenté.

La boite d'entrée 14 est positionnée sur une première face 4a du faisceau d'échange de chaleur 2. La boite de sortie 12 est positionnée sur une deuxième face 4b du faisceau d'échange de chaleur 2, opposée à la première face 4a du faisceau d'échange de chaleur 2 selon une direction verticale V de l'échangeur de chaleur 1. La boite d'entrée 14 et la boite de sortie 12 présentent une forme de quadrilatère avec quatre bords latéraux 28 en regard de la paroi périphérique 6 du faisceau d'échange de chaleur 2. La boite d'entrée 14 et la boite de sortie 12 comprennent également quatre coins de boite 26 disposés en regard des quatre coins de faisceau 8 du faisceau d'échange de chaleur 2.

Une tubulure d'entrée 61 est reliée à la boite d'entrée 14 afin de diriger l'air vers cette même boite d'entrée 14. A l'opposé de la boite d'entrée 14, suivant la direction verticale V de l'échangeur de chaleur 1, le collecteur d'admission 10 est positionné en recouvrement de la boite de sortie 12. Le collecteur d'admission 10 a pour fonction de repartir le flux d'air vers des chambres de combustion du moteur à combustion interne, au moyen de quatre conduits d'admission 101. Le collecteur d'admission 10 comporte également des interfaces de fixation 102, lui permettant d'être solidarisé au moteur du véhicule automobile ou de porter d'autres composants. La boite de sortie 12 et le collecteur d'admission 10 peuvent se trouver sous la forme de deux pièces distinctes ou encore former une seule et unique pièce.

Un premier organe de fixation 3a est disposé sur la périphérie de la première face 4a du faisceau d'échange de chaleur 2 de telle sorte qu'il suit le contour de la paroi périphérique 6 et des coins de faisceau 8 du faisceau d'échange de chaleur 2. De la même manière, un deuxième organe de fixation 3b est disposé sur la périphérie de la deuxième face 4b du faisceau d'échange de chaleur 2 de telle sorte qu'il suit le contour de la paroi périphérique 6 et des coins de faisceau 8 du faisceau d'échange de chaleur 2. Le premier organe de fixation 3a et le deuxième organe de fixation 3b ont pour fonction de maintenir respectivement la boite d'entrée 14 et la boite de sortie 12 dans le faisceau d'échange de chaleur 2, notamment lorsqu'un flux d'air le traverse.

Dans la suite de la description, on regroupera sous le terme d'organe de fixation 3, le premier organe de fixation 3a et le deuxième organe de fixation 3b, lorsque les caractéristiques développées seront communes. On regroupera également sous le terme de boite 12, 14, la boite d'entrée 14 et la boite de sortie 12, lorsque les caractéristiques décrites s'appliquent indifféremment à l'une ou l'autre des boites 12, 14.

La figure 2 illustre une vue en coupe suivant un premier plan A, visible sur la figure 1, de l'organe de fixation 3 disposé le long de la paroi périphérique 6 du faisceau d'échange de chaleur 2 et sur un des bords latéraux 28 de la boite 12, 14.

La boite 12, 14 du faisceau d'échange de chaleur 2 comprend un épaulement 16 orienté vers l'extérieur de ladite boite 12, 14. L'épaulement 16 comprend alors une extrémité libre 161 à l'extérieure de la boite 12, 14, formant une zone d'appui 18. L'épaulement 16 comprend également une face supérieure 22 à l'opposé de la zone d'appui 18 suivant la direction verticale V de l'échangeur de chaleur 1. Entre la zone d'appui 18 et la face supérieure 22 s'étend une face de contact 24, suivant la direction verticale V de l'échangeur de chaleur 1 et dirigée vers l'extérieur de la boite 12, 14.

L'organe de fixation 3 est alors disposé le long de la périphérie du faisceau d'échange de chaleur 2 de telle sorte qu'il enserre l'épaulement 16 de la boite 12, 14 au niveau des bord latéraux 28.

L'organe de fixation 3 comprend une paroi latérale 30 en regard de la face de contact 24. La paroi latérale 30 est alors prolongée d'une part, par une paroi de base 34 suivit d'une paroi de gorge 36, de telle sorte que ces parois forment une gorge 39 autour de la zone d'appui 18 de l'épaulement 16. La paroi de base 34 est ainsi la paroi au droit de la zone d'appui 18, tandis que la paroi de gorge 36 est la paroi qui s'étend entre l'épaulement 16 et le faisceau d'échange de chaleur 2. La paroi de gorge 36 peut alors être solidaire du faisceau d'échange de chaleur 2, notamment par soudage ou brasage.

La paroi latérale 30 est prolongée d'autre part, par au moins une paroi supérieure 32, positionnée de telle sorte qu'elle soit au contact de la face supérieure 22 de l'épaulement 16. Le sertissage de la paroi supérieure 32 forme un premier pli 50a, correspondant à une courbure entre la paroi latérale 30 et la paroi supérieure 32. On définit alors une première hauteur H1, mesurée depuis l'extrémité libre 161 de l'épaulement 16 suivant une droite parallèle à la paroi périphérique 6 du faisceau d'échange de chaleur 2, et correspondant à la hauteur du premier pli 50a de la paroi supérieure 32 de la portion rectiligne 31.

Selon l'invention, la première hauteur H1 du premier pli 50a de la paroi supérieure 32, permet à cette dernière d'être en contact avec la face supérieure 22 de l'épaulement 16. Un tel contact permet notamment d'offrir un maintien optimal de la boite 12, 14 dans le faisceau d'échange de chaleur 2.

Un joint 20 peut être logé entre la zone d'appui 18 et la paroi de base 34. Le joint 20 permet d'assurer l'étanchéité de la fixation de la boite 12, 14 contre le faisceau d'échange de chaleur 2. Lorsque la boite 12, 14 est fixée dans le faisceau d'échange de chaleur 2, le joint 20 est comprimé entre la zone d'appui 18 et la paroi de base 34. Selon un exemple de réalisation non illustré, le joint 20 peut être directement intégré à la zone d'appui 18 de l'épaulement 16.

On comprend de ces caractéristiques précédentes que l'organe de fixation 3 est enserré autour de l'épaulement 16 des bord latéraux 28 de la boite 12, 14. Lors de l'arrivée d'un flux d'air dans l'échangeur de chaleur, la boite 12, 14 peut être déplacée verticalement vers l'extérieur du faisceau d'échange de chaleur 2. Il a alors été remarqué que le déplacement de la boite 12, 14, généré par la pression provenant du turbocompresseur, provoquaient une concentration de contraintes mécaniques sur l'organe de fixation 3, notamment au niveau des coins de boite. Cette concentration de contraintes peut à terme, fragiliser voire déformer les parois supérieures 32 positionnées de part et d'autre des coins de boite. Un système de sécurisation des coins de boite a donc été développé par le demandeur, et sera exposé dans la suite de la description détaillée selon trois modes de réalisation.

Il convient alors de considérer que l'ensemble des caractéristiques de la portion rectiligne 31 exposées à la figure 2, et notamment du contact entre la paroi supérieure 32 et la face supérieure 22 de l'épaulement 16, s'appliquent à l'ensemble des modes de réalisation exposés ci-après.

La figure 3, la figure 4 et la figure 5 seront décrites conjointement afin d'exposer un premier mode de réalisation de l'invention. La figure 3 illustre une vue rapprochée d'un des coins de boite 26 de la boite 12, 14. La figure 4 illustre l'organe de fixation 3 selon un premier mode de réalisation et avant son sertissage sur l'épaulement 16 de la boite 12, 14. La figure 5 est une vue en coupe suivant un deuxième plan B, visible à la figure 1, de l'assemblage de l'organe de fixation 3 de la figure 4 sur le coin de boite 26 de la boite 12, 14 de la figure 3.

Le bord latéral 28 de l'épaulement 16 de la boite 12, 14, comprend une première épaisseur T1 mesurée suivant une droite parallèle à la direction verticale V de l'échangeur de chaleur et le long de la face de contact 24, entre l'extrémité libre 161 de l'épaulement 16 et sa face supérieure 22.

Selon une caractéristique du premier mode de réalisation de l'invention, le coin de boite 26 de la boite 12, 14 comprend une deuxième épaisseur T2, mesurée suivant une droite parallèle à la direction verticale V de l'échangeur de chaleur et le long de la face de contact 24 entre l'extrémité libre 161 de l'épaulement 16 et sa face supérieure 22. Suivant une caractéristique de ce premier mode de réalisation de l'invention, la deuxième épaisseur T2 est strictement inférieure à la première épaisseur T1 du bord latéral 28 de l'épaulement 16.

L'organe de fixation 3, notamment visible à la figure 4, présente la forme d'un quadrilatère définit par la paroi latéral 30. L'organe de fixation 3 comprend alors quatre portions rectilignes 31 et quatre coins, que l'on nommera portion de coin 40. On comprend alors que les quatre portions de coin 40 épousent la forme des coins de faisceau 8 du faisceau d'échange de chaleur 2 et les coins de boite 26 de la boite 12, 14.

Au niveau d'au moins une des portions de coin 40, la paroi latérale 30 est prolongée par une paroi d'angle 44. La paroi d'angle 44 s'étend alors parallèlement et depuis la paroi latérale 30 de la portion de coin 40. Également, elle constitue un prolongement de deux parois supérieures 32, positionnées de part et d'autre de la portion de coin 40, de telle sorte qu'elle les relie.

L'organe de fixation 3 peut avantageusement comprendre des dents 38, qui émergent depuis la paroi de base 34 de l'organe de fixation 3. Les dents 38 ont pour fonction de renforcer la liaison entre l'organe de fixation 3 et au moins la paroi périphérique 6.

Une fois positionnée autour de l'épaulement 16 de la boite 12, 14, la paroi d'angle 44 est sertie sur la face supérieure 22 de l'épaulement 16 des coins de boite 26, comme visible sur la figure 5.

Le sertissage de la paroi d'angle 44 forme alors une portion déformée 52, correspondant à la zone où la pression mécanique du sertissage a été effectuée. Le sertissage de la paroi d'angle 44 forme alors une arête de sertissage 50b, ménagée à une deuxième hauteur H2. La deuxième hauteur H2 est mesurée depuis l'extrémité libre 161 de l'épaulement 16 suivant une droite parallèle à la paroi périphérique 6 du faisceau d'échange de chaleur 2, et correspondant à la hauteur de l'arête de sertissage 50b de la paroi d'angle 44 de la portion de coin 40.

Selon une caractéristique du premier mode de réalisation de l'invention, la première hauteur de la paroi supérieure 32, détaillée à la figure 2, et la deuxième hauteur H2 de la paroi d'angle 44 sont identiques. On comprend alors que le sertissage de la paroi supérieure 32 et de la paroi d'angle 44 dans ce premier mode de réalisation est effectué sur une même hauteur.

Toujours selon le premier mode de réalisation de l'invention, la portion déformée 52 est à distance non nulle de la face supérieure 22, de telle sorte qu'elle génère un espace 54 entre la portion déformée 52 et la face supérieure 22. On comprend alors que cet espace 54 est engendré grâce à la deuxième épaisseur T2 du coin de boite 26 qui est inférieure à la première épaisseur T1 du bord latéral 28 de l'épaulement 16, puisque la première hauteur du pli de sertissage et la deuxième hauteur H2 de l'arête de sertissage 50b sont identiques sur l'ensemble de l'organe de fixation 3.

Le sertissage de la paroi d'angle 44 forme de part et d'autre de la portion déformée 52 au moins une aile 48. Cette aile 48 correspond à une portion immédiatement adjacente à la portion déformée 52 et qui est relevée. On comprend que l'aile 48 est induite par la forme non rectiligne du coin de boite 26, empêchant le rabattement total de la paroi d'angle 44 sur l'épaulement 16. Selon l'exemple illustré, deux ailes 48 sont ménagées de part et d'autre de la portion déformée 52.

Lors de l'utilisation de l'échangeur de chaleur, la pression exercée par le flux circulant dans la boite 12, 14 risque de soulever cette dernière. Le sertissage de la paroi d'angle 44 permet en cas de déformation ou de rupture d'une paroi supérieure 32 adjacente au coin de boite 26, de venir sécuriser le maintien de la boite 12, 14 dans le faisceau d'échange de chaleur 2, notamment en servant de butée. On comprend alors que dans ce cas, l'espace 54 disparaîtrait puisque la face supérieure 22 viendrait en butée contre la portion déformée 52.

Un deuxième mode de réalisation de l'organe de fixation 3 va maintenant être décrit avec la figure 6. Il convient de considérer que seules les caractéristiques différentes entre l'organe de fixation 3 du premier mode de réalisation et celui du deuxième mode de réalisation seront exposées dans la suite de la description. Pour les caractéristiques identiques, il convient de se reporter aux figures 3 à 5. Également, les caractéristiques de la portion rectiligne exposées à la figure 2 s'appliquent à ce deuxième mode de réalisation de l'organe de fixation 3.

La figure 6 illustre une vue en coupe selon le deuxième plan B, visible à la figure 1, du deuxième mode de réalisation de l'invention. Une différence avec le premier mode de réalisation de l'invention exposé précédemment réside dans le fait que la deuxième épaisseur T2 du coin de boite 26 est identique à la première épaisseur du bord latéral de l'épaulement de la boite 12, 14. Également dans ce deuxième mode de réalisation, l'organe de fixation 3 est identique à l'organe de fixation 3 du premier mode de réalisation, visible à la figure 4.

La paroi d'angle 44 est alors sertie sur l'épaulement 16 de la boite 12, 14 et forme la portion déformée 52 positionnée à distance non nulle de la face supérieure 22 de l'épaulement 16 du coin de boite 26. Le sertissage de la paroi d'angle 44 forme alors l'arête de sertissage 50b à la deuxième hauteur H2. La deuxième hauteur de pli H2 est dans ce deuxième mode de réalisation strictement supérieure à la première hauteur du pli de sertissage de la paroi supérieure. Cette caractéristique permet de ménager l'espace 54 puisque l'épaisseur de l'épaulement 16 est constante sur l'ensemble de la boite 12, 14.

Un troisième mode de réalisation de l'invention va maintenant être décrit avec la figure 7. La figure 8 et la figure 9 montrent des vues en coupes selon le deuxième plan B, visible à la figure 1, de l'organe de fixation 3 de la figure 7, respectivement avant et après son sertissage sur l'épaulement 16 du coin 26 de la boite 12, 14. Comme pour le deuxième mode de réalisation, les caractéristiques de la portion rectiligne exposées à la figure 2 s'appliquent à ce troisième mode de réalisation de l'organe de fixation 3.

L'organe de fixation 3 de la figure 7 comprend les caractéristiques de l'organe de fixation exposé à la figure 4, et également une paroi de repli 46. La paroi de repli 46 du troisième mode de réalisation de l'invention, s'étend parallèlement depuis la paroi d'angle 44 de la portion de coin 40 de l'organe de fixation 3. Dans l'exemple illustré à la figure 7, l'organe de fixation 3 comprend quatre parois de repli 46 sur ses quatre portions de coin 40.

On définit une deuxième distance D2, correspondant à la distance sur laquelle s'étend la portion de coin 40, mesurée le long d'une droite parallèle à la direction verticale V de l'échangeur de chaleur, depuis la paroi de base 34 et jusqu'à une l'extrémité libre 461 de la paroi de repli 46. On définit une première distance D1, correspondant à la distance sur laquelle s'étendent les portions rectilignes 31 de l'organe de fixation 3, mesurée le long d'une droite parallèle à la direction verticale V de l'échangeur de chaleur, depuis la paroi de base 34 jusqu'à une extrémité libre 321 d'une des parois supérieures 32. Ainsi, selon une caractéristique de ce troisième mode de réalisation, la deuxième distance D2 est strictement supérieure à la première distance D1. On comprend alors que la paroi de repli 46 permet de générer la deuxième distance D2 supérieure à la première distance D1.

Toujours selon ce troisième mode de réalisation et selon une caractéristique identique au deuxième mode de réalisation, la première épaisseur du bord latéral de l'épaulement 16 et la deuxième épaisseur T2 du coin de boite 26 sont identiques.

Une fois l'organe de fixation 3 positionné sur la périphérie du faisceau d'échange de chaleur 2, comme cela est visible à la figure 8, la paroi d'angle 44 peut être au moins en partie en contact avec la face de contact 24 de l'épaulement 16. La paroi de repli 46 est, au moins en partie, libre de tout contact avec l'épaulement 16 de la boite 12, 14.

Une fois l'organe de fixation 3 positionné sur l'épaulement 16 de la boite 12, 14, la paroi de repli 46 est sertie sur l'épaulement 16 du coin de boite 26 de la boite 12, 14 et forme la portion déformée 52, visible à la figure 9. Le sertissage forme également l'arête de sertissage 50b positionnée à la deuxième hauteur H2.

Selon une caractéristique de ce troisième mode de réalisation de l'invention et comme pour le deuxième mode de réalisation, la deuxième hauteur H2 est strictement supérieure à la première hauteur du pli de sertissage de la paroi supérieure de l'organe de fixation 3.

Selon la même caractéristique que pour les modes de réalisation précédents, la portion déformée 52 est en regard et à distance non nulle, de la face supérieure 22 de l'épaulement 16, de telle sorte de ménager l'espace 54. Ainsi l'espace 54 est engendré comme pour le deuxième mode de réalisation grâce à la deuxième hauteur H2 supérieure à la première hauteur de la paroi supérieure.

Un avantage du troisième mode de réalisation par rapport au deuxième mode de réalisation est qu'il offre une plus grande surface de portion déformée 52 en regard de l'épaulement 16. En effet, l'arête de sertissage 50b est positionnée à la deuxième hauteur H2 supérieure à la première hauteur, mais la paroi de repli 46 de la portion de coin 40 permet, contrairement au deuxième mode de réalisation, de conserver une plus grande surface de portion déformée 52 et donc de butée à l'encontre de l'épaulement. Cette plus grande surface de butée permet d'augmenter la tenue mécanique de la boite 12, 14 en cas de déformation ou de rupture d'une des parois supérieures adjacentes.

L'invention, telle qu'elle vient d'être décrite, atteint bien le but qu'elle s'était fixé, et permet de proposer un moyen de sécurisation de la fixation de la boite d'entrée et/ou de la boite de sortie dans le faisceau d'échange de chaleur notamment au niveau des coins de boite.

## Revendications

1. Echangeur de chaleur (1) comportant :
- un faisceau d'échange de chaleur (2) dans lequel circulent un premier fluide et un second fluide ;
- au moins une boite (12, 14) configurée pour canaliser le second fluide depuis ou vers le faisceau d'échange de chaleur (2), ladite boite (12, 14) comprenant au moins un épaulement (16) orienté vers l'extérieur de ladite boite (12, 14), et la boite (12, 14) comprenant au moins un coin de boite (26) ;
- au moins un organe de fixation (3) de la boite (12, 14) est disposé au moins en partie à la périphérie du faisceau d'échange de chaleur (2) et comporte au moins une gorge (39) périphérique délimitée par une paroi de base (34) et une paroi latérale (30) et dans laquelle est logé au moins partiellement l'épaulement (16) de la boite (12, 14), l'organe de fixation (3) comprenant :
∘ une portion rectiligne (31) dont la paroi latérale (30) est en partie prolongée par au moins une paroi supérieure (32) en contact avec l'épaulement (16) de la boite ;
∘ au moins une portion de coin (40) en regard du coin de boite (26) ;
**caractérisé en ce qu'**une partie de la portion de coin (40) est en regard d'une face supérieure (22) de l'épaulement (16), opposée à la gorge (39) de l'organe de fixation (3), et à une distance non nulle de cette face supérieure (22) de telle sorte qu'un espace (54) est ménagé entre la portion de coin (40) et la face supérieure (22) de l'épaulement (16).

2. Echangeur de chaleur selon la revendication 1, dans lequel la partie de la portion de coin (40) située en regard de la face supérieure (22) de l'épaulement (16) est une butée à l'encontre de la face supérieure (22) en cas de déformation de la paroi supérieure (32) de la paroi latérale (30).

3. Echangeur de chaleur (1) selon l'une quelconque des revendications précédentes, dans lequel la portion rectiligne (31) de l'organe de fixation (3) comprend un pli de sertissage (50a) situé à une première hauteur (H1) d'une extrémité libre (161) de l'épaulement (16), la portion de coin (40) comprenant une arête de sertissage (50b) située à une deuxième hauteur (H2) de l'extrémité libre (161) de l'épaulement (16).

4. Echangeur de chaleur (1) selon l'une quelconque des revendications précédentes, dans lequel la boite (12, 14) comprend au moins un bord latéral (28) et le coin de boite (26), le bord latéral (28) de l'épaulement (16) étant défini par une première épaisseur (T1) mesurée entre l'extrémité libre (161) de l'épaulement (16) et la face supérieure (22) de l'épaulement (16), le coin de boite (26) étant défini par une deuxième épaisseur (T2) mesurée parallèlement à la première épaisseur (T1) entre l'extrémité libre (161) de l'épaulement (16) et la face supérieure (22) de l'épaulement (16), la deuxième épaisseur (T2) étant strictement inférieure à la première épaisseur (T1).

5. Echangeur de chaleur selon la revendication 3, dans lequel la première hauteur (H1) du pli de sertissage (50a) est strictement inférieure à la deuxième hauteur (H2) de l'arête de sertissage (50b).

6. Echangeur de chaleur (1) selon la revendication 3, dans lequel la première hauteur (H1) du pli de sertissage (50a) est égale à la deuxième hauteur (H2) de l'arête de sertissage (50b).

7. Echangeur de chaleur (1) selon l'une quelconque des revendications précédentes, dans lequel la portion de coin (40) comprend une paroi de repli (46), la portion rectiligne (31) de l'organe de fixation (3) s'étendant sur une première distance (D1) mesurée entre la paroi de base (34) et une extrémité libre (321) de la paroi supérieure (32) de la paroi latérale (30), la portion de coin (40) s'étendant sur une deuxième distance (D2) mesurée parallèlement à la première distance (D1) entre la paroi de base (34) et une extrémité libre (461) de la paroi de repli (46) de la portion de coin (40), la deuxième distance (D2) étant strictement supérieure à la première distance (D1).

8. Echangeur de chaleur (1) selon l'une quelconque des revendications précédentes, dans lequel la portion de coin (40) comprend au moins une portion déformée (52) ménagée au droit et à distance non nulle de la face supérieure (22) de l'épaulement (16), ainsi qu'au moins une aile (48) adjacente à la portion déformée (52).

9. Echangeur de chaleur (1) selon l'une des revendications précédentes, dans lequel l'organe de fixation (3) est brasé sur la périphérie du faisceau d'échange de chaleur (2).

## Patentansprüche

1. Wärmetauscher (1), welcher aufweist:
- ein Wärmetauscherbündel (2), in welchem ein erstes Fluid und ein zweites Fluid zirkulieren;
- wenigstens einen Kasten (12, 14), der dafür ausgelegt ist, das zweite Fluid aus oder zu dem Wärmetauscherbündel (2) zu leiten, wobei der Kasten (12, 14) wenigstens einen Ansatz (16) umfasst, der zur Außenseite des Kastens (12, 14) hin gerichtet ist, und der Kasten (12, 14) wenigstens eine Kastenecke (26) umfasst;
- wenigstens ein Organ zur Befestigung (3) des Kastens (12, 14), das wenigstens teilweise am Umfang des Wärmetauscherbündels (2) angeordnet ist und wenigstens eine umlaufende Rille (39) aufweist, die von einer Bodenwand (34) und einer Seitenwand (30) begrenzt wird und in welcher der Ansatz (16) des Kastens (12, 14) wenigstens teilweise aufgenommen ist, wobei das Befestigungsorgan (3) umfasst:
○ einen geraden Abschnitt (31), dessen Seitenwand (30) zum Teil durch wenigstens eine obere Wand (32) verlängert wird, die sich mit dem Ansatz (16) des Kastens in Kontakt befindet;
○ wenigstens einen Eckabschnitt (40) gegenüber der Kastenecke (26);
**dadurch gekennzeichnet, dass** ein Teil des Eckabschnitts (40) einer Oberseite (22) des Ansatzes (16) zugewandt ist, die der Rille (39) des Befestigungsorgans (3) gegenüberliegt, und einen von null verschiedenen Abstand von dieser Oberseite (22) aufweist, derart, dass ein Zwischenraum (54) zwischen dem Eckabschnitt (40) und der Oberseite (22) des Ansatzes (16) ausgebildet ist.

2. Wärmetauscher nach Anspruch 1, wobei der Teil des Eckabschnitts (40), welcher der Oberseite (22) des Ansatzes (16) zugewandt angeordnet ist, im Falle einer Verformung der oberen Wand (32) der Seitenwand (30) ein Anschlag für die Oberseite (22) ist.

3. Wärmetauscher (1) nach einem der vorhergehenden Ansprüche, wobei der gerade Abschnitt (31) des Befestigungsorgans (3) einen Crimpfalz (50a) umfasst, der sich auf einer ersten Höhe (H1) eines freien Endes (161) des Ansatzes (16) befindet, während der Eckabschnitt (40) eine Crimpkante (50b) umfasst, die sich auf einer zweiten Höhe (H2) des freien Endes (161) des Ansatzes (16) befindet.

4. Wärmetauscher (1) nach einem der vorhergehenden Ansprüche, wobei der Kasten (12, 14) wenigstens einen seitlichen Rand (28) und die Kastenecke (26) umfasst, wobei der seitliche Rand (28) des Ansatzes (16) durch eine zwischen dem freien Ende (161) des Ansatzes (16) und der Oberseite (22) des Ansatzes (16) gemessene erste Dicke (T1) definiert ist, wobei die Kastenecke (26) durch eine parallel zur ersten Dicke (T1) zwischen dem freien Ende (161) des Ansatzes (16) und der Oberseite (22) des Ansatzes (16) gemessene zweite Dicke (T2) definiert ist, wobei die zweite Dicke (T2) streng kleiner als die erste Dicke (T1) ist.

5. Wärmetauscher nach Anspruch 3, wobei die erste Höhe (H1) des Crimpfalzes (50a) streng kleiner als die zweite Höhe (H2) der Crimpkante (50b) ist.

6. Wärmetauscher (1) nach Anspruch 3, wobei die erste Höhe (H1) des Crimpfalzes (50a) gleich der zweiten Höhe (H2) der Crimpkante (50b) ist

7. Wärmetauscher (1) nach einem der vorhergehenden Ansprüche, wobei der Eckabschnitt (40) eine zurückgebogene Wand (46) umfasst, wobei sich der gerade Abschnitt (31) des Befestigungsorgans (3) über einen zwischen der Bodenwand (34) und einem freien Ende (321) der oberen Wand (32) der Seitenwand (30) gemessenen ersten Abstand (D1) erstreckt, wobei sich der Eckabschnitt (40) über einen parallel zum ersten Abstand (D1) zwischen der Bodenwand (34) und einem freien Ende (461) der zurückgebogenen Wand (46) des Eckabschnitts (40) gemessenen zweiten Abstand (D2) erstreckt, wobei der zweite Abstand (D2) streng größer als der erste Abstand (D1) ist.

8. Wärmetauscher (1) nach einem der vorhergehenden Ansprüche, wobei der Eckabschnitt (40) wenigstens einen verformten Abschnitt (52), der gegenüber der Oberseite (22) des Ansatzes (16) und in einem von null verschiedenen Abstand von dieser ausgebildet ist, sowie wenigstens einen dem verformten Abschnitt (52) benachbarten Schenkel (48) umfasst.

9. Wärmetauscher (1) nach einem der vorhergehenden Ansprüche, wobei das Befestigungsorgan (3) an den Umfang des Wärmetauscherbündels (2) angelötet ist.

## Claims

1. Heat exchanger (1) comprising:
- a heat-exchange core (2) in which a first fluid and a second fluid circulate;
- at least one header tank (12, 14) configured to duct the second fluid from or to the heat-exchange core (2), said header tank (12, 14) comprising at least a shoulder (16) oriented toward the outside of said header tank (12, 14), and the header tank (12, 14) comprising at least one header tank corner (26);
- at least one fastening member (3) for fastening the header tank (12, 14) is positioned at least partly at the periphery of the heat-exchange core (2) and comprises at least one peripheral groove (39) delimited by a base wall (34) and a lateral wall (30) and in which the shoulder (16) of the header tank (12, 14) is at least partially housed, the fastening member (3) comprising:
o a rectilinear portion (31) of which the lateral wall (30) is in part extended by at least one upper wall (32) in contact with the shoulder (16) of the header tank;
o at least one corner portion (40) facing the corner of the header tank (26);
**characterized in that** part of the corner portion (40) faces an upper face (22) of the shoulder (16) opposite to the groove (39) of the fastening member (3) and at a non-zero distance from this upper face (22) so that a space (54) is left between the corner portion (40) and the upper face (22) of the shoulder (16).

2. Heat exchanger according to Claim 1, wherein the part of the corner portion (40) that is situated facing the upper face (22) of the shoulder (16) is an abutment against the upper face (22) in the event of deformation of the upper wall (32) of the lateral wall (30).

3. Heat exchanger (1) according to either one of the preceding claims, wherein the rectilinear portion (31) of the fastening member (3) comprises a crimping bend (50a) situated at a first height (H1) from a free end (161) of the shoulder (16), the corner portion (40) comprising a crimping corner edge (50b) situated at a second height (H2) from the free end (161) of the shoulder (16) .

4. Heat exchanger (1) according to any one of the preceding claims, wherein the header tank (12, 14) comprises at least one lateral edge (28) and the header tank corner (26), the lateral edge (28) of the shoulder (16) being defined by a first thickness (T1) measured between the free end (161) of the shoulder (16) and the upper face (22) of the shoulder (16), the header tank corner (26) being defined by a second thickness (T2), measured parallel to the first thickness (T1), between the free end (161) of the shoulder (16) and the upper face (22) of the shoulder (16), the second thickness (T2) being strictly less than the first thickness (T1).

5. Heat exchanger according to Claim 3, wherein the first height (H1) of the crimping bend (50a) is strictly less than the second height (H2) of the crimping corner edge (50b).

6. Heat exchanger (1) according to Claim 3, wherein the first height (H1) of the crimping bend (50a) is equal to the second height (H2) of the crimping corner edge (50b).

7. Heat exchanger (1) according to any one of the preceding claims, wherein the corner portion (40) comprises a fold-over wall (46), the rectilinear portion (31) of the fastening member (3) extending over a first distance (D1) measured between the base wall (34) and a free end (321) of the upper wall (32) of the lateral wall (30), the corner portion (40) extending over a second distance (D2) measured parallel to the first distance (D1) between the base wall (34) and a free end (461) of the fold-over wall (46) of the corner portion (40), the second distance (D2) being strictly greater than the first distance (D1).

8. Heat exchanger (1) according to any one of the preceding claims, wherein the corner portion (40) comprises at least one deformed portion (52) created in line with and at a non-zero distance from the upper face (22) of the shoulder (16), as well as at least one wing (48) adjacent to the deformed portion (52).

9. Heat exchanger (1) according to one of the preceding claims, wherein the fastening member (3) is brazed to the periphery of the heat-exchange core (2).
